# EUROPEAN PATENT APPLICATION

(11) **EP 4 421 029 A1**
(43) Date of publication of application: **28.08.2024**
(21) Application number: 22884137.5
(22) Date of filing: 19.10.2022
(51) Int. Cl.: C01B 32/162, B01J 19/08, B82Y 40/00

(54) **METHOD FOR SYNTHESIZING CARBON NANOTUBES**

(30) Priority: 19.10.2021 KR 20210139495
(71) Applicant: LG Chem, Ltd., Yeongdeungpo-gu Seoul 07336 (KR); Tekna Plasma Systems Inc., Sherbrooke, Quebec J1L 2T9 (CA)
(72) Inventor: KIM, Dong Sik, Daejeon 34122 (KR); GUO, Jiayin, Sherbrooke, Québec J1K 0A3 (CA); KIM, Tae Hoon, Daejeon 34122 (KR); LEE, Hyung Jin, Daejeon 34122 (KR); MIN, Geun Gi, Daejeon 34122 (KR); SONG, Doo Hoon, Daejeon 34122 (KR); KANG, Soo Hee, Daejeon 34122 (KR); KIM, Ye Byeol, Daejeon 34122 (KR); KIM, Byoung Jin, Daejeon 34122 (KR); LEE, Sung Hyun, Daejeon 34122 (KR)
(74) Representative: Goddar, Heinz J.
(86) International application number: PCT/KR2022/095141
(87) International publication number: WO 2023/068916

(57) **Abstract**

The present invention relates to a method for synthesizing carbon nanotubes using a nanoparticle catalyst prepared by vaporizing a catalyst raw material using plasma and then condensing the vaporized catalyst raw material, and use of the production method of the present invention can make the synthesized carbon nanotubes have high crystallinity, and facilitate the mass synthesis.

## Description

### TECHNICAL FIELD

The present invention relates to a method for producing carbon nanotubes, which can efficiently produce high-quality carbon nanotubes within a short time by using a CVD reactor and a nanoparticle catalyst prepared using plasma.

### BACKGROUND ART

Carbon nanotubes are in a nanostructure in which graphene having a thickness of one layer of carbon atoms is rolled up into a cylindrical shape, and classified into single-walled and multi-walled carbon nanotubes according to the number of layers of the surrounding shells. In general, carbon nanotubes have a diameter of several nm to several tens of nm, and a length is several ten- to several thousand-fold longer than the diameter. In addition, the carbon nanotubes can be metallic or semiconducting according to a chiral index (a value in which the diameter of the tube and the rolled angle are expressed by an integer of (n, m)). In addition, single-walled carbon nanotubes are often aligned in a "bundle" form in which several strands are aggregated by Van der Waals Force. Meanwhile, the multi-walled carbon nanotubes are composed of multi-layered shells, and the diameter and chiral index of each layer are different. In addition, the multi-walled carbon nanotubes have many defects (sp³ C, vacancy, etc.) in the crystal structure, and thus have weak mechanical properties.

Because carbon nanotubes exhibit high electrical conductivity and thermal conductivity, excellent strength, and the like as compared with conventional materials, carbon nanotubes can be effectively used in various fields such as energy, nanotechnology, optics, material engineering, and the like. For example, carbon nanotubes have mechanical properties of high elasticity of about thousands of GPa and high strength of about tens of GPa.

In terms of application, carbon nanotubes can be utilized as a conductive agent for positive and negative electrodes for lithium ion batteries, which are new electrode materials. Due to the excellent strength, conductivity, and low density of carbon nanotubes, it is possible to improve battery life and capacity when charging-discharging compared to the conventional carbon black conductive agent. In particular, single-walled carbon nanotubes have a pronounced life improvement effect when applied to a silicon negative electrode even though the amount used is 1/10 relative to multi-walled carbon nanotubes.

Various studies are also being conducted in terms of production methods for industrial use of carbon nanotubes. Conventionally, arc-discharge, laser deposition, chemical vapor deposition, and the like have been known as methods capable of synthesizing carbon nanotubes. The arc-discharge is a method for producing carbon nanotubes by inducing arc-discharge between carbon rods in an argon or hydrogen atmosphere at a pressure lower than atmospheric pressure. For example, single-walled carbon nanotubes having high purity and high crystallinity and a uniform diameter may be produced using a Ni-Y catalyst. The arc-discharge has an advantage that it is possible to obtain high-quality carbon nanotubes with few defects, but has a disadvantage that amorphous carbon is simultaneously produced and is not suitable for mass synthesis.

The laser deposition is a method for producing carbon nanotubes by emitting intense pulsed light such as a laser onto a carbon target in which a metal catalyst such as nickel or cobalt is mixed in a high temperature atmosphere of 900 °C or higher. The laser deposition has an advantage that carbon nanotubes with high purity can be produced, and the diameter of carbon nanotubes may be adjusted to some extent by changing the conditions of the emitted pulsed light, etc., but also has a disadvantage that the laser deposition method is not suitable for mass production in consideration of the competitiveness of the production scale.

The chemical vapor deposition is the most commonly used method in the industrial field in that mass synthesis is possible. The types of chemical vapor deposition include fluidized bed chemical vapor deposition (FBCVD), floating catalyst chemical vapor deposition (FCCVD), and the like. The chemical vapor deposition is a method for producing carbon nanotubes in a gas phase by reacting a catalyst with a reaction gas including a source gas, a reducing gas, and a carrier gas at a high temperature. That is, a carbon source gas is decomposed by a nanoparticle catalyst, and thus solid carbon nanotubes are formed on the surface of the liquid nanoparticle catalyst. As a specific example, single-walled carbon nanotubes in a range of 500 °C to 900 °C may be synthesized using a Fe:Mo catalyst supported on silica and methane (CH₄) as a raw material. However, there is a limitation in terms of productivity and yield to mass-synthesize single-walled carbon nanotubes using a supported catalyst or a catalyst precursor.

Accordingly, there is a need for research on a novel method for mass-synthesizing high-quality carbon nanotubes, which can solve the limitations of the existing method for synthesizing carbon nanotubes and is economical and consistent.

### PRIOR ART DOCUMENTS

(Patent Document 1) US 8048396 B2
(Patent Document 2) KR 10-2012-0112918 A

### DISCLOSURE OF THE INVENTION

### TECHNICAL PROBLEM

An aspect of the present invention provides a novel physical-chemical production method for synthesizing high-quality carbon nanotubes having excellent purity and crystallinity.

### TECHNICAL SOLUTION

To solve the above-described limitations, the present invention provides a method for producing carbon nanotubes.

Specifically, (1) according to an aspect of the present invention, there is provided a method for producing carbon nanotubes, the method including: a step for vaporizing a catalyst raw material using a plasma torch to form catalyst vapor (S1); a step for transferring the catalyst vapor to a quenching zone by a plasma flow (S2); a step for condensing the catalyst vapor in the quenching zone to prepare a nanoparticle catalyst (S3); a step for introducing each of the prepared nanoparticle catalyst and a source gas into a CVD reactor (S4); and a step for synthesizing carbon nanotubes in the CVD reactor (S5).
(2) In (1) above of the present invention, there is provided the method for producing carbon nanotubes, wherein the nanoparticle catalyst has an average particle size of 100 nm or less.
(3) In (1) or (2) above of the present invention, there is provided the method for producing carbon nanotubes, wherein the plasma torch is an inductively coupled RF thermal plasma torch.
(4) In any one of (1) to (3) above of the present invention, there is provided the method for producing carbon nanotubes, wherein the catalyst raw material includes at least one metal selected from the group consisting of Fe, Co, Ni, Pd, Pt, Ru, Cu, Mn, Cr, Mo, V, Mg, Si, Ge, and Eu, or a precursor thereof.
(5) In any one of (1) to (4) above of the present invention, there is provided the method for producing carbon nanotubes, wherein the catalyst raw material further includes sulfur or a sulfide of at least one metal selected from the group consisting of Fe, Co, Ni, Pd, Pt, Ru, Cu, Mn, Cr, Mo, V, Mg, Si, Ge, and Eu.
(6) In any one of (1) to (5) above of the present invention, there is provided the method for producing carbon nanotubes, wherein the catalyst raw material is in the form of liquid or solid.
(7) In any one of (1) to (6) above of the present invention, there is provided the method for producing carbon nanotubes, wherein the catalyst raw material is in the form of powder having an average particle size of 5 um to 100 µm.
(8) In any one of (1) to (7) above of the present invention, there is provided the method for producing carbon nanotubes, wherein the quenching zone includes a first quenching zone and a second quenching zone, and the catalyst vapor flows from the first quenching zone to the second quenching zone.
(9) In any one of (1) to (8) above of the present invention, there is provided the method for producing carbon nanotubes, wherein an inert gas is injected into the first quenching zone and the second quenching zone.
(10) In any one of (1) to (9) above of the present invention, there is provided the method for producing carbon nanotubes, wherein a hydrogen gas is injected into the second quenching zone.
(11) In any one of (1) to (10) above of the present invention, there is provided the method for producing carbon nanotubes, wherein the source gas includes at least one selected from the group consisting of C1-C10 aliphatic hydrocarbon, C6-C20 aromatic hydrocarbon, carbon monoxide, natural gas, C1-C6 alcohol, and acetone.
(12) In any one of (1) to (11) above of the present invention, there is provided the method for producing carbon nanotubes, wherein the nanoparticle catalyst prepared in step S3 above is in an aerosol state.
(13) In any one of (1) to (12) above of the present invention, there is provided the method for producing carbon nanotubes, wherein step S4 above is performed by further introducing sulfur or a sulfur-containing compound as a cocatalyst into the CVD reactor.
(14) In any one of (1) to (13) above of the present invention, there is provided the method for producing carbon nanotubes, wherein step S4 above is performed by further introducing at least one carrier gas selected from the group consisting of an inert gas, hydrogen, and nitrogen into the CVD reactor.
(15) In any one of (1) to (14) above of the present invention, there is provided the method for producing carbon nanotubes, wherein the CVD reactor has a temperature of 800 °C to 1,400 °C.
(16) In any one of (1) to (15) above of the present invention, there is provided the method for producing carbon nanotubes, wherein the produced carbon nanotubes are single-walled carbon nanotubes, multi-walled carbon nanotubes, or a mixture of single-walled carbon nanotubes and multi-walled carbon nanotubes.
(17) In any one of (1) to (16) above of the present invention, there is provided the method for producing carbon nanotubes, wherein steps S1 to S5 above are performed continuously.

### ADVANTAGEOUS EFFECTS

When the method for producing carbon nanotubes of the present invention is used, high-quality carbon nanotubes can be produced in a shorter time as compared with a conventional method for producing carbon nanotubes using supported catalyst techniques and a fluidized bed reactor.

In addition, a conventional method for synthesizing carbon nanotubes in a floating reactor using a catalyst precursor (FCCVD) has a disadvantage that due to the simultaneous production of catalyst nanoparticles and carbon nanotubes, it is difficult to independently control variables in the process of synthesizing carbon nanotubes, and accordingly, it is difficult to optimize the synthesis of carbon nanotubes. On the other hand, the method for producing carbon nanotubes of the present invention can continuously synthesize high-quality carbon nanotubes by separately performing a step for preparing catalytic nanoparticles and a step for synthesizing carbon nanotubes in a physically distinct space, and sequentially connecting and performing the two steps. Particularly, in the step for preparing catalyst nanoparticles, a plasma apparatus, more particularly, an inductively coupled RF plasma apparatus is used to effectively control the particle size and distribution of the catalyst nanoparticles, and then, in the step for synthesizing carbon nanotubes, the CVD reactor is used to synthesize carbon nanotubes, thereby producing carbon nanotubes having excellent physical properties.

### BRIEF DESCRIPTION OF THE DRAWINGS

FIG. 1 is obtained by observing carbon nanotubes produced in Example 3 of the present invention with an SEM image at a magnification of 100K.
FIG. 2 is obtained by observing carbon nanotubes produced in Example 3 of the present invention with an SEM image at a magnification of 50K.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Method for Producing Carbon Nanotubes

A commonly used method for producing a large amount of carbon nanotubes in the industrial field is using a fluidized bed reactor. Specifically, in the above method, carbon nanotubes are produced by filling a fluidized bed reactor with a carrier including a metal catalyst, then injecting a source gas to the reactor, and heating the reactor to grow carbon nanotubes on the surfaces of catalyst particles. Such fluidized bed chemical vapor deposition (FBCVD) has an advantage that a large amount of carbon nanotubes can not only be produced, but carbon nanotubes can also be stably stabilized, but has the following disadvantages.

1) When carbon nanotubes are synthesized using a fluidized bed reactor, there is a limit to the improvement in the quality of carbon nanotubes. The catalyst applied to the fluidized bed reactor is prepared by sintering a metal catalyst precursor. Because the catalyst prepared by such a method has a relatively wide particle size distribution, the uniformity of the diameters of the carbon nanotubes prepared by the catalyst slightly deteriorates, thereby making it difficult to obtain uniform carbon nanotube products. In addition, due to the characteristics of the fluidized bed reactor, the carbon nanotubes, which have been already synthesized, are filled in the reactor and used, and thus the growth time for each of the carbon nanotubes may not be constant, and this phenomenon may also deteriorate the uniformity of the finally produced carbon nanotubes. Furthermore, multi-walled carbon nanotubes synthesized at 800 °C or less have a crystallinity (G/D ratio) of 1, which is low, and thus have a disadvantage that mechanical properties thereof are weak.

2) When carbon nanotubes are synthesized using a fluidized bed reactor, there is a limit to the improvement in the efficiency of the production process. When the fluidized bed reactor is used, it is necessary to fill the inner space of the reactor with a bed before the operation of the reactor, and it is necessary to obtain the grown carbon nanotubes even after the completion of the reaction, thereby making it difficult to implement a continuous production process. In addition, because a time to heat the reactor is required even after the reaction is started, the actual time consumed for the reaction is less relative to the total operation time of the process, and thus there is a limit to the improvement in the efficiency of the production process in terms of time.

Accordingly, the present invention is to suggest a method for producing carbon nanotubes, which can improve the efficiency of the production process of the carbon nanotubes in terms of time and secure the uniformity and high quality of the synthesized carbon nanotubes.

Specifically, the present invention provides a method for producing carbon nanotubes, the method including a step for vaporizing a catalyst raw material using a plasma torch to form catalyst vapor (S1), a step for transferring the catalyst vapor to a quenching zone by a plasma flow (S2), a step for condensing the catalyst vapor in the quenching zone to prepare a nanoparticle catalyst (S3), a step for introducing each of the prepared nanoparticle catalyst and a source gas into a CVD reactor (S4), and a step for synthesizing carbon nanotubes in the CVD reactor (S5).

The method for producing carbon nanotubes of the present invention may be mainly divided into a section for preparing a nanoparticle catalyst (steps S1 to S3) and a section for synthesizing carbon nanotubes (steps S4 and S5), and each step of the present invention will be described separately below.

### Section for Preparing Nanoparticle Catalyst (S1 to S3)

In the view of a catalyst used for synthesizing carbon nanotubes, the present invention enables the preparation of catalyst particles in the form of nanoparticles at high speed using a plasma torch, instead of the preparation of a catalyst through an existing sintering process, thereby obtaining catalyst particles having a small average particle size and a narrow particle size distribution, and synthesizing high-quality carbon nanotubes within a short time through the nanoparticle catalyst.

The plasma is generated using all suitable gases which are ionized in a high frequency electromagnetic field, has sufficient energy to vaporize a catalyst raw material, and can achieve sufficient vaporizing of the catalyst raw material within a short time by vaporizing the catalyst raw material through the plasma. The plasma may specifically be a thermal plasma, and thus the plasma torch that is a means for supplying the plasma may be an inductively coupled RF thermal plasma torch. The RF plasma torch may be used to generate nanoparticles by forming an inductive plasma, vaporizing a catalyst raw material injected from the outside using the formed inductive plasma, and then transferring the formed catalyst vapor to a quenching zone and condensing the transferred catalyst vapor. In particular, since the plasma flow formed using the inductively coupled RF thermal plasma torch has sufficiently high energy, the catalyst vapor is not easily condensed immediately after vaporization, and is condensed through a subsequent transfer process, thereby forming a more uniform nanoparticle catalyst.

In the process of forming nanoparticles using the inductively coupled RF thermal plasma torch, a cooling rate and a vapor rate are key parameters for determining the size of the nanoparticles, and nanoparticles having a smaller size are formed at a high cooling rate (about 10⁵ K/s to 10⁶ K/s) and a low vapor rate.

### Step for vaporizing catalyst raw material (S1)

Step S1 above is a step for vaporizing a catalyst raw material using a plasma torch. A nanoparticle catalyst may be prepared through a process of vaporizing and condensing the catalyst raw material, and the vaporizing step requires high energy, and thus the above-described plasma may be used. Meanwhile, the term "vaporization" as used herein refers to converting a catalyst raw material in a solid or liquid state into vapor, and does not refer only to "evaporation" that converts a liquid into a gas, but also includes other concepts including "sublimation" that converts a solid into a gas.

In this step, a gas such as argon, hydrogen, or nitrogen, which may be generally used as a thermal plasma operating gas, may be used alone or in combination. In this step, the temperature of the thermal plasma should be an ultrahigh temperature sufficient to vaporize the catalyst raw material, for example, a temperature of up to 10,000 K.

The catalyst raw material introduced in the present step may include at least one metal selected from the group consisting of Fe, Co, Ni, Pd, Pt, Ru, Cu, Mn, Cr, Mo, V, Mg, Si, Ge, and Eu, or a precursor thereof, and preferably may include at least one metal selected from the group consisting of Fe, Co, and Ni, or a precursor thereof. The listed metal components are components having catalytic activity in the carbon nanotube synthesis reaction, and it is preferable to include the listed materials in order to efficiently synthesize carbon nanotubes from the nanoparticle catalyst prepared in a subsequent step. In particular, the catalyst containing at least one metal component from among Fe, Co, and Ni have the advantage of synthesizing carbon nanotubes with a high yield.

In addition, the catalyst raw material may further include sulfur or a sulfide of at least one metal selected from the group consisting of Fe, Co, Ni, Pd, Pt, Ru, Cu, Mn, Cr, Mo, V, Mg, Si, Ge, and Eu. When the sulfur or a metal sulfide is included in the catalyst raw material, the activity of the finally prepared catalyst can be further increased.

The catalyst raw material introduced in step S1 above may be in the form of liquid or solid, and preferably, may be in the form of powder having an average particle size of 1 um to 100 um. When the catalyst raw material is in the above-described form, there is an advantage that the stability of the catalyst raw material itself is excellent and the introduction of the catalyst raw material into the plasma apparatus is easy. Meanwhile, when the catalyst raw material is in the form of powder, the flowability of the powder in the apparatus should be good so that the introduction into the plasma apparatus is easier, and to this end, it may be particularly preferable that the average particle size of the powder satisfies the above-described range. More specifically, the powder may have an average particle size of 1 µm to 100 µm, more preferably 5 µm to 50 µm.

### Step for transferring catalyst vapor to quenching zone (S2)

The catalyst raw material, i.e., the catalyst vapor, vaporized through the above-described step S1 is transferred to a quenching zone due to convection and diffusion to form a vapor concentration profile. The catalyst vapor may effectively produce catalyst nanoparticles in the subsequent condensation process when the temperature of the internal centerline is at least 3,000 K before entering the quenching zone.

Specifically, when the step for transferring the catalyst vapor the quenching zone by the plasma flow is performed, the catalyst vapor may be mixed with other components (e.g., a cocatalyst) due to convection and diffusion in the reactor during the transfer process, and then uniformity of the catalyst vapor may be secured so that composition of the nanoparticle catalyst finally prepared may be uniform, and the particle size distribution thereof may be obtained in the form of lognormal, and thus the distribution may be narrow.

On the other hand, when the transferring step is not performed, some of the catalyst raw material powder, which has not been completely vaporized during the process of vaporization and condensation, may be mixed with nanoparticles, and furthermore, it is difficult to condense the catalyst vapor effectively, and thus the particle size distribution of the subsequent obtained nanoparticle catalyst may be obtained in the form of bimodal, and the distribution may be wide.

In this step, the transferring of the catalyst vapor to the quenching zone means that the catalyst vapor is transferred to the quenching zone along the flow of plasma in the reactor following step S1 above. The reactor may be a reactor made of a high-temperature refractory material such as graphite. Meanwhile, the time to transfer the catalyst vapor may vary with the amount of the introduced catalyst raw material or the size of the thermal plasma apparatus, but should be a time to obtain sufficient uniformity, and the uniformity of the formed nanoparticles may deteriorate when the time is too short or long. For example, the residence time of the catalyst vapor in the reactor may be 1 millisecond (ms) to 10 seconds, and more specifically, 10 milliseconds to 1 second. When the residence time in the reactor is within the above-described range, the uniformity of the prepared nanoparticle catalyst may be higher.

### Condensing step (S3)

A nanoparticle-type catalyst may be prepared by condensing, in the quenching zone, the catalyst vapor transferred in the previous step. In particular, if the cooling rate is fast, the growth time of solid particles is relatively short, and thus nanoparticles having a narrow particle size distribution and a small average particle size may be prepared.

The condensing step may be performed using a quenching gas, and a person skilled in the art may select an appropriate gas from among gases known to be used for quenching and apply the selected gas to the present invention, for example, an inert gas or a nitrogen gas may be applied as the quenching gas. In the case of performing quenching using the quenching gas, the condensation may occur at the interface between the plasma flow, which carries the catalyst vapor, and the quenching gas, and thus the catalyst in the form of nanoparticles may be prepared at the interface. Meanwhile, the nanoparticles formed on the interface may be transferred together with the flow of the quenching gas, and thus, the nanoparticles may be then introduced, into the CVD reactor, in an aerosol state mixed with the quenching gas.

It is possible to control the average particle size of the prepared catalyst by controlling the flow rate of the cooling gas in this step. For example, when the cooling rate is increased by increasing the flow rate of the cooling gas, a nanoparticle catalyst having a small size may be prepared.

Meanwhile, in this step, the quenching zone in which quenching is performed may include a first quenching zone and a second quenching zone, and the catalyst vapor may flow from the first quenching zone to the second quenching zone. In addition, the quenching gas may be injected into the first quenching zone and the second quenching zone, and a hydrogen gas may be further injected into the second quenching zone together with the quenching gas. When the quenching process is performed in two distinct regions and a hydrogen gas is additionally injected into the second quenching zone where condensation is finally performed, there is an advantage in terms of controlling the size of the nanoparticle catalyst.

The nanoparticle-type catalyst obtained in this step through the previous steps may have an average particle size of 100 nm or less, and preferably, may have an average particle size of 20 nm or less. As described above, when the catalyst is prepared through the above-described steps, a nanoparticle catalyst having a small average particle size and a narrow particle size distribution may be prepared, and specifically, the nanoparticle catalyst satisfying the above-mentioned conditions may be prepared. Meanwhile, the average particle size may be determined through BET analysis. Specifically, the average particle size may be calculated by the following equation. Average particle size = 6/(BET specific surface area *density)

In the above equation, the unit of the BET specific surface area is m²/g, and equipment such as BELSORP-max of BEL Japan Inc. may be used as measurement equipment of the BET specific surface area.

### Section for Synthesizing Carbon Nanotubes (S4 and S5)

The carbon nanotubes may be synthesized using the nanoparticle catalyst prepared in the previous catalyst particle preparing section, and the carbon nanotubes may be prepared through a step for each of introducing the specifically prepared nanoparticle catalyst and the source gas into a CVD reactor (S4) and a step for synthesizing carbon nanotubes in the CVD reactor (S5).

### Step for introducing each of nanoparticle catalyst and source gas (S4)

In order to synthesize carbon nanotubes, a step for introducing the nanoparticle catalyst prepared using the plasma apparatus and the source gas into a CVD reactor should be performed. The catalyst is the same as described above, and the source gas is for forming carbon nanotubes on the surface of the catalyst, and should be a gas containing carbon.

The source gas may be a carbon-containing gas which can be decomposed at a high temperature to form carbon nanotubes, and as a specific example, various carbon-containing compounds such as aliphatic alkane, aliphatic alkene, aliphatic alkyne, and aromatic compounds may be used, more specifically, at least one selected from the group consisting of C1-C10 aliphatic hydrocarbon, C6-C20 aromatic hydrocarbon, carbon monoxide, natural gas, C1-C6 alcohol, and acetone may be included, and still more specifically, a compound such as methane, ethane, ethylene, acetylene, methylacetylene, vinylacetylene, propane, butane, pentane, hexane, propylene, carbon monoxide, natural gas, butadiene, benzene, toluene, cyclopentadiene, cyclohexane, ethanol, methanol, propanol, or acetone may be used. It is particularly preferable to use methane in terms of economics and efficiency.

In the present invention, carbon nanotubes are synthesized through a CVD reactor, and the CVD reactor may be physically separated from the plasma apparatus in which steps S1 to S3 above can be performed. The CVD reactor is a reactor suitable for performing a reaction while a nanoparticle catalyst and a source gas introduced in an aerosol state are mixed, and may grow carbon nanotubes on the surface while the nanoparticle catalyst is floated. The CVD reactor may be a chemical vapor deposition (CVD) reactor, a catalytic chemical vapor deposition (CCVD) reactor, or a floating catalyst chemical vapor deposition (FCCVD) reactor.

Meanwhile, in the method for producing carbon nanotubes of the present invention, the nanoparticle catalyst and the source gas may each be introduced to the CVD reactor. When the nanoparticle catalyst and the source gas are premixed and introduced into the CVD reactor, the equipment for premixing the two components should be provided between the plasma apparatus and the CVD reactor. Accordingly, there may occur limitations in that the process not only becomes complex but the catalyst is also deactivated due to coking, and thus it is difficult to synthesize carbon nanotubes. On the other hand, when the nanoparticle catalyst and the source gas are separately introduced into the CVD reactor, input control variables of each component may not only be easily controlled, but crystallinity of the finally produced carbon nanotubes may also be increased.

In this step, in addition to the nanoparticle catalyst and the reaction source gas as described above, a cocatalyst may be further introduced into the CVD reactor. The cocatalyst may increase the catalytic activity to increase the production yield of carbon nanotubes, and may be sulfur or a sulfur-containing compound, and more specifically, may be at least one selected from the group consisting of thiophene, alkyl thiophene, benzothiophene, hydrogen sulfide, and carbon disulfide.

The input amount of the cocatalyst may vary with the type and amount of the source gas to be introduced into the CVD reactor, the amount of the catalyst, and the like, but for example, the cocatalyst may be introduced with a weight ratio of the catalyst to the cocatalyst of 1:1 to 100:1. When the input amount of the cocatalyst is too large, the cocatalyst may poison the catalyst itself, and when the amount is too small, the effect of the cocatalyst input may be insignificant.

### Carbon nanotube synthesis step (S5)

The carbon nanotubes may be synthesized while the source gas is decomposed on the surface of the nanoparticle catalyst in an aerosol state introduced into the CVD reactor in the previous step, and specifically, the carbon nanotubes may be synthesized by heating the CVD reactor. The heated CVD reactor may have a temperature of 800 °C to 1,400 °C. The reaction source gas may be decomposed at the above-mentioned temperature, and at the same time, carbon nanotubes may be formed on the surfaces of the liquid catalyst particles. When the temperature of the CVD reactor is lower than such a temperature, the reaction source gas may not be sufficiently decomposed, and when the temperature of the CVD reactor is higher than such a temperature, the synthesis yield of carbon nanotubes may be significantly reduced.

In this step, the carbon nanotubes are synthesized by growing on the surfaces of the liquid catalyst particles, and the finally obtained carbon nanotube product may include the catalyst particles together. In addition, the carbon nanotubes obtained in this step may be single-walled carbon nanotubes or multi-walled carbon nanotubes, and may be a mixture of single-walled carbon nanotubes and multi-walled carbon nanotubes. In addition, the carbon nanotubes may be obtained in the form of powder.

The above-described steps S1 to S5 may be continuously performed. In the conventional method for producing carbon nanotubes using a fluidized bed reactor, the fluidized bed reactor is operated in a batch manner, whereas, in the present invention, because the introduction of the raw material and nanoparticle catalyst is continuously performed, catalyst particles can be continuously obtained and the operation of the CVD reactor can also be continuously performed, the overall production method can also be continuously performed.

The carbon nanotubes obtained by the production method of the present invention may be bundled. That the carbon nanotubes are "bundled" means that a plurality of carbon nanotubes are arranged or aligned in parallel in a certain direction to form a secondary structure in the form of a bundle or a rope, and particularly, the carbon nanotubes obtained by the method of the present invention may be bundled and thus may be suitable for use as a conductive agent, etc.

The carbon nanotubes produced by the production method of the present invention may have a specific surface area of 1,000 m²/g or less and a bulk density of 0.05 g/cm³ or more. In addition, the carbon nanotubes produced by the production method of the present invention may have a maximum crystallinity (I_{G}/I_{D} value) of 40 or more and excellent crystallinity. Meanwhile, the crystallinity may be determined with a value of I_{G}/I_{D} determined through Raman analysis.

Hereinafter, the present invention will be described in more detail with reference to examples and experimental examples in order to specifically describe the present invention, but is not limited to the examples and experimental examples. The examples according to the present invention may be modified in various different forms, and the scope of the present invention should not be interpreted to be limited to the examples described below. Rather, the examples of the present invention will be provided so that the present invention will be described in more detail to those skilled in the art.

### Materials

As a catalyst raw material, Fe powder and FeS powder having a particle size of 10 um to 50 um were mixed and used, and moisture was removed in advance by drying the catalyst raw material in a vacuum oven before the catalyst material was introduced into a feeder.

### Example 1

In order to ignite plasma in a vacuum state, Ar (32 lpm) and H₂ (1.4 lpm) were injected into a plasma torch with a sheath gas and Ar (12 lpm) was injected into a central gas. After the ignition was completed, the pressure in plasma equipment was normal pressure (14.7 psi), and the catalyst raw material (FeS content of 16 wt%) was supplied to the feeder (carrier gas: Ar, flow rate: 5 lpm) of RF thermal plasma equipment to vaporize the catalyst raw material in the plasma torch. The formed catalyst vapor was transferred to the quenching zone through convection and diffusion, and 75 lpm and 175 lpm of the quenching gas, Ar, were injected into the first quenching zone and the second quenching zone, respectively, to quench and condense the catalyst vapor. Meanwhile, in the second quenching zone, a H₂ gas was injected with Ar at a flow rate of 30 lpm. The catalyst vapor that passed through both the first quenching zone and the second quenching zone was condensed to form a nanoparticle catalyst in an aerosol state, which was then introduced to the CVD reactor previously heated to 1,350 °C.

In addition, a methane gas, which is a source gas, was injected into the CVD reactor at a flow rate of 4 lpm separately from the nanoparticle catalyst, and the methane gas was passed through a preheating device heated to 500 °C before the injection.

The nanoparticle catalyst and the source gas were introduced into the CVD reactor, and at the same time, the synthesis of carbon nanotubes was started, and a synthesis process was performed for 20 minutes. After the process was completed, gas injection was stopped and the CVD reactor was cooled to obtain carbon nanotubes.

### Example 2

Carbon nanotubes were obtained in the same manner as in Example 1, except that the mixture having a FeS content of 20 wt% was used as the catalyst raw material, the temperature of the CVD reactor was heated to 1,400 °C, and the methane gas was injected into the CVD reactor at a flow rate of 3 lpm and the hydrogen gas at a flow rate of 9.5 lpm.

### Example 3

Carbon nanotubes were obtained in the same manner as in Example 2, except that the methane gas was injected into the CVD reactor at a flow rate of 3 lpm and the hydrogen gas at a flow rate of 50 lpm.

### Comparative Example 1

Carbon nanotubes were obtained in the same manner as in Example 2, except that 4 lpm of methane gas and 9.5 lpm of hydrogen gas were premixed with a nanoparticle catalyst in an aerosol state using a small chamber before injected into the CVD reactor, and then injected into the CVD reactor, and the CVD reactor was heated to 1,300 °C.

The production conditions in Examples and Comparative Example are summarized and shown in Table 1 below.

**[Table 1]**

| | **Example 1** | **Example 2** | **Example 3** | **Comparative Example 1** |
|---|---|---|---|---|
| FeS content in catalyst raw material (wt%) | 16 | 20 | 20 | 20 |
| Reactor temperature (°C) | 1350 | 1400 | 1400 | 1300 |
| Methane gas flow rate (lpm) | 4 | 3 | 3 | 4 |
| Hydrogen gas flow rate (lpm) | 30 | 9.5 | 50 | 9.5 |
| Injection position of methane gas | CVD reactor | CVD reactor | CVD reactor | Small chamber |

### Experimental Example 1. Identification of Crystallinity of Produced Carbon Nanotubes

The I_{G} and I_{D} values of the carbon nanotubes produced in the Examples and Comparative Example were determined using a Raman spectrum, and the mean crystallinity and the maximum crystallinity were calculated, and the results are shown in Table 2 below. The mean crystallinity and the maximum crystallinity are obtained by determining I_{G}/I_{D} values for various points of a carbon nanotube sample and then taking the mean value and the maximum value thereof.

**[Table 2]**

| | **Example 1** | **Example 2** | **Example 3** | **Comparative Example 1** |
|---|---|---|---|---|
| Mean crystallinity | 29 | 32 | 64 | 0.736 |
| Maximum crystallinity | 48 | 76 | 99 | 0.867 |

As can be seen from Table 2 above, the carbon nanotubes produced in Examples of the present invention showed high crystallinity with a maximum crystallinity of 40 or more, whereas the carbon nanotubes produced in Comparative Example 1 showed a crystallinity value of less than 1. That is, this means that the crystallinity of the carbon nanotubes produced in Comparative Example 1 is significantly decreased compared to Examples, and that the high-quality carbon nanotubes can be produced using the method for producing carbon nanotube of the present invention.

### Experimental Example 2. Confirmation of SEM Images of Carbon Nanotubes Produced in Examples

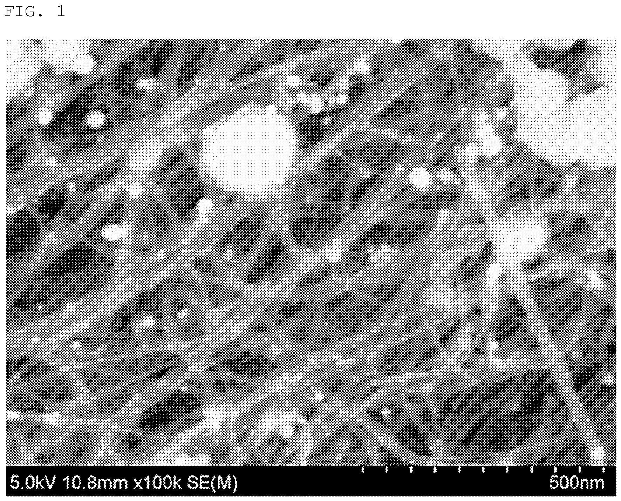

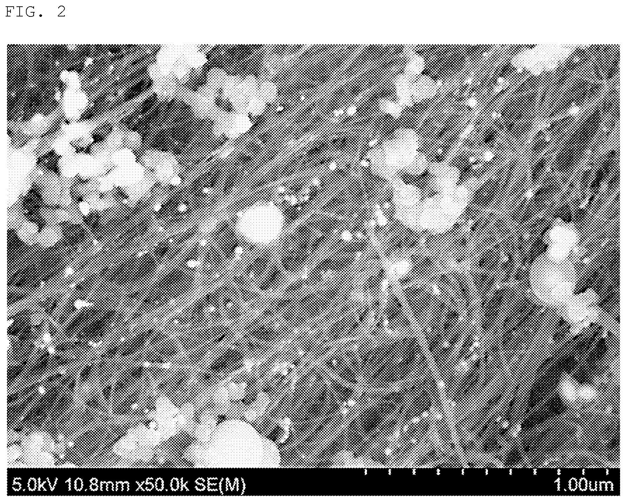

The carbon nanotubes produced in Example 3 were observed through an SEM image. The carbon nanotubes were observed at a magnification of 100K and 50K, and the results are shown in FIGS. 1 and 2.

As can be seen in FIGS. 1 and 2, it was confirmed that when the method for producing carbon nanotubes of the present invention is used, several strands of thin and flexible carbon nanotubes were produced in a bundled form.

## Claims

1. A method for producing carbon nanotubes, the method comprising:
a step for vaporizing a catalyst raw material using a plasma torch to form catalyst vapor (S1);
a step for transferring the catalyst vapor to a quenching zone by a plasma flow (S2);
a step for condensing the catalyst vapor in the quenching zone to prepare a nanoparticle catalyst (S3);
a step for introducing each of the prepared nanoparticle catalyst and a source gas into a CVD reactor (S4); and
a step for synthesizing carbon nanotubes in the CVD reactor (S5).

2. The method of claim 1, wherein the nanoparticle catalyst has an average particle size of 100 nm or less.

3. The method of claim 1, wherein the plasma torch is an inductively coupled RF thermal plasma torch.

4. The method of claim 1, wherein the catalyst raw material comprises at least one metal selected from the group consisting of Fe, Co, Ni, Pd, Pt, Ru, Cu, Mn, Cr, Mo, V, Mg, Si, Ge, and Eu, or a precursor thereof.

5. The method of claim 4, wherein the catalyst raw material further comprises sulfur or a sulfide of at least one metal selected from the group consisting of Fe, Co, Ni, Pd, Pt, Ru, Cu, Mn, Cr, Mo, V, Mg, Si, Ge, and Eu.

6. The method of claim 1, wherein the catalyst raw material is in the form of liquid or solid.

7. The method of claim 6, wherein the catalyst raw material is in the form of powder having an average particle size of 5 um to 100 µm.

8. The method of claim 1, wherein the quenching zone comprises a first quenching zone and a second quenching zone, and the catalyst vapor flows from the first quenching zone to the second quenching zone.

9. The method of claim 8, wherein an inert gas is injected into the first quenching zone and the second quenching zone.

10. The method of claim 8, wherein a hydrogen gas is injected into the second quenching zone.

11. The method of claim 1, wherein the source gas comprises at least one selected from the group consisting of C1-C10 aliphatic hydrocarbon, C6-C20 aromatic hydrocarbon, carbon monoxide, natural gas, C1-C6 alcohol, and acetone.

12. The method of claim 1, wherein the nanoparticle catalyst prepared in step S3 above is in an aerosol state.

13. The method of claim 1, wherein step S4 above is performed by further introducing sulfur or a sulfur-containing compound as a cocatalyst into the CVD reactor.

14. The method of claim 1, wherein step S4 above is performed by further introducing at least one carrier gas selected from the group consisting of an inert gas, hydrogen, and nitrogen into the CVD reactor.

15. The method of claim 1, wherein the CVD reactor has a temperature of 800 °C to 1,400 °C.

16. The method of claim 1, wherein the produced carbon nanotubes are single-walled carbon nanotubes, multi-walled carbon nanotubes, or a mixture of single-walled carbon nanotubes and multi-walled carbon nanotubes.

17. The method of claim 1, wherein steps S1 to S5 above are performed continuously.
